# FASCICULE DE BREVET EUROPEEN

(11) **EP 3 781 382 B1**
(45) Date de publication et mention de la délivrance du brevet: **23.03.2022**
(21) Numéro de dépôt: 19722663.2
(22) Date de dépôt: 04.04.2019
(51) Int. Cl.: B29C 49/64, B29C 49/06, B29C 49/42, B65G 21/20

(54) **PROCEDE DE POSITIONNEMENT DE RAMPES DE PROTECTION THERMIQUE DANS UNE STATION DE CHAUFFAGE DE PREFORMES**
VERFAHREN ZUM POSITIONIEREN VON WÄRMEABSCHIRMUNGSRAMPEN IN EINER VORFORMHEIZSTATION
METHOD FOR POSITIONING HEAT-SCREENING RAMPS IN A PREFORM HEATING STATION

(30) Priorité: 16.04.2018 FR 1853285
(43) Date de publication de la demande: 24.02.2021
(73) Titulaire: Sidel Participations, 76930 Octeville-sur-Mer (FR)
(72) Inventeur: BOURVELLEC, Loïc, 76930 Octeville-sur-mer (FR); MORIN, Stéphane, 76930 Octeville-sur-mer (FR)
(74) Mandataire: Sidel Group
(86) Numéro de dépôt international: PCT/FR2019/050790
(87) Numéro de publication internationale: WO 2019/202233

(56) Documents cités:
- EP-A1- 2 329 933
- FR-A1- 2 303 656
- FR-A1- 2 922 148
- FR-A1- 2 930 241
- FR-A1- 2 950 284
- FR-A1- 3 037 329
- US-A- 6 135 271
- US-A1- 2007 095 247

## Description

### DOMAINE TECHNIQUE DE L'INVENTION

L'invention concerne un procédé de positionnement de rampes de protection d'une station de chauffage de préformes réalisés en matériau thermoplastique, lors d'un changement de format de préformes.

### ARRIERE PLAN TECHNIQUE DE L'INVENTION

On connaît déjà des installations de fabrication de récipients en grandes séries à partir de préformes. Les préformes sont généralement obtenues par injection d'un matériau thermoplastique. Puis, elles sont refroidies et stockées en vue de leur transformation ultérieure en récipients finaux.

Les préformes comportent classiquement un corps qui est destiné à être conformé en récipient final lors d'une opération de formage, par exemple par soufflage ou par étirage-soufflage, de la paroi de la préforme. Les préformes comportent aussi un col qui est déjà moulé à sa forme définitive. Il est donc important de protéger le col de la préforme afin qu'il ne soit ni déformé ni endommagé durant la fabrication du récipient final.

Pour permettre le formage du corps de la préforme lors de l'étape de formage, la paroi du corps est préalablement chauffée à une température suffisante pour la rendre malléable. Cette opération de chauffage est réalisée juste avant l'opération de formage par passage de la préforme dans une station de chauffage.

La station de chauffage comporte généralement un tunnel de chauffage dans lequel sont agencés des dispositifs de chauffage, telles que des lampes à infrarouge. Les préformes sont prises en charge par des organes de transport qui font défiler leur corps dans le tunnel de chauffage. Pour permettre un chauffage homogène du corps des préformes, les organes de transport sont généralement conçus pour entraîner la préforme en rotation autour de son axe principal lors de son transport. Pour éviter toute surchauffe du corps de la préforme, il est aussi connu d'équiper de tunnel de chauffage de moyens de ventilation qui permettent de faire circuler l'air, évitant ainsi la création de zones trop chaudes dans le tunnel de chauffage.

Le corps de la préforme est rendu malléable par chauffage du matériau thermoplastique constituant sa paroi, notamment au-delà d'une température de transition vitreuse.

Comme expliqué précédemment, le col de la préforme présente déjà sa forme définitive. Contrairement au corps de la préforme, le col est donc maintenu à une température inférieure à ladite température de transition vitreuse pour éviter sa déformation.

A cet effet, la station de chauffage est conçue pour que le corps de la préforme soit reçu dans une partie "chaude" de la station formée par le tunnel de chauffage, tandis que le col de la préforme, qui doit rester relativement froid, est reçu dans une partie "froide" qui est généralement située sous le tunnel de chauffage.

Bien entendu, la partie chaude et la partie froide de la station de chauffage sont adjacentes. Pour réduire les échanges thermiques entre la partie chaude et la partie froide, il est connu d'interposer entre ces deux parties des rampes de protection thermique entre lesquelles les préformes défilent. Ces rampes de protection permettent de diminuer l'ouverture le tunnel de chauffage et la partie froide. Les rampes de protection sont écartées pour former une rainure de défilement qui présente une largeur légèrement supérieure au diamètre externe directement sous le col de la préforme afin de permettre le défilement des préformes sans contact avec les rampes de protection.

Ces deux rampes de protection sont généralement refroidies par circulation interne d'un liquide caloporteur pour éviter que les rampes de protection n'accumulent de la chaleur.

Par ailleurs, les installations de fabrication de récipient sont prévues pour permettre de réaliser des récipients finaux de formats différents. Ceci entraîne généralement l'utilisation de préformes de formats et de dimensions adaptés.

Lors d'un changement de format de récipient, il est donc nécessaire d'adapter l'installation, et notamment la station de chauffage, aux dimensions des nouvelles préformes. Ceci implique notamment d'effectuer un réglage de l'écartement des rampes de protection pour adapter la largeur de la rainure au diamètre sous col des préformes du nouveau format.

Le réglage purement manuel de la position de chaque rampe de protection requiert du temps.

On a déjà proposé d'automatiser le réglage des rampes de protection en entrant dans une unité électronique de commande le diamètre sous col théorique du lot de préforme qui va être traité. L'unité électronique de commande pilote alors des moyens de déplacement motorisés des rampes de protection afin d'obtenir une largeur de rainure adaptée audit diamètre sous col théorique.

Cependant, une telle méthode n'est pas robuste car en cas de défaut de conception ou d'étiquetage du lot de préformes, l'écartement des rampes de protection peut être soit trop important, favorisant le passage de chaleur du tunnel vers la partie froide, soit trop faible, provoquant un blocage des préformes lorsqu'elles pénètrent entre les rampes de protection.

En tous les cas, cette méthode entièrement automatique ne permet pas de réaliser un écartement optimal des rampes de protection en rapport avec la valeur réelle du diamètre sous col des préformes.

Le document FR 2 950 284 décrit un procédé de positionnement de rampes de protection d'une station de chauffage de préformes réalisées en matériau thermoplastique, pour adapter la station de chauffage à un nouveau format de préformes, chaque préforme présentant un col destiné à être tempéré et un corps présentant, directement au-dessous du col un diamètre extérieur dit "diamètre sous col", la station de chauffage comportant:- des organes de transport des préformes en file le long d'un tunnel de chauffage;- au moins une paire de rampes longitudinales parallèles de protection thermique des cols qui sont écartées transversalement pour réserver une rainure longitudinale de défilement des préformes.

Le document US6135271A décrit un procédé de positionnement de rampes pur adapter les rampes à un nouveau format d'articles comprenant au moins une paire de rampes longitudinal parallèles de protection thermiques, qui sont écartées transversalement pour réserver une rainure longitudinale de défilement dé préformes, au moins l'une de rampes étant mobile transversalement pour adapter la largeur de la rainure au nouveau format de préformes.

Le document FR3037329A1 décrit un procédé de positionnement où au moins une paire de rampes longitudinal sont écartées transversalement pour réserver une rainure longitudinale de défilement dé préformes, au moins l'une de rampes étant mobile transversalement pour adapter la largeur de la rainure au nouveau format de préformes.

### BREF RESUME DE L'INVENTION

L'invention propose un procédé de positionnement de rampes (54) de protection d'une station (10) de chauffage de préformes (12) réalisés en matériau thermoplastique, pour adapter la station de chauffage à un nouveau format de préformes (12), chaque préforme (12) présentant un col (16) destiné à être tempéré et un corps (18) présentant, directement au-dessous du col (16) un diamètre extérieur dit "diamètre (D1) sous col", la station (10) de chauffage comportant :
- des organes (28) de transport des préformes (12) en file le long d'un tunnel (22) de chauffage ;
- au moins une paire de rampes (54) longitudinales parallèles de protection thermique des cols (16) qui sont écartées transversalement pour réserver une rainure (56) longitudinale de défilement des préformes (12), au moins l'une des rampes (54) de protection étant mobile transversalement pour adapter la largeur de la rainure (56) au nouveau format de préformes (12) ;
- un dispositif (58) motorisé de déplacement de l'au moins une rampe (54) mobile pour adapter automatiquement la largeur de la rainure (56),
le procédé de positionnement comportant une étape (S1) préalable d'étalonnage au cours de laquelle :
on amène les deux rampes (54) de protection dans une position initiale dans laquelle elles sont écartées d'une première distance très supérieure au diamètre (D1) sous col de préformes (12) du nouveau format,
on agence au moins deux éléments (12) d'étalonnage présentant une largeur transversale prédéterminée en relation avec le diamètre (D1) sous col des préformes (12) du nouveau format
puis on pilote le déplacement de l'au moins une rampe (54) de protection mobile afin de rapprocher transversalement les rampes (54) de protection l'une de l'autre dans une position étalonnée dans laquelle elles sont chacune au contact simultané des deux éléments (12) d'étalonnage.

On entend par « distance très supérieure » au diamètre D1 sous col, une distance supérieure, non seulement au diamètre sous col, mais également supérieure à la somme du diamètre sous col et d'un jeu fonctionnel permettant le défilement des préformes le long de la rainure longitudinale entre les deux rampes de protection thermiques.

Selon un mode de réalisation, le procédé peut comprendre l'une ou plusieurs des caractéristiques ci-après peuvent être prises isolément ou en combinaison:
- l'étape préalable d'étalonnage comprend pour chacun des deux éléments d'étalonnage, une mesure d'une grandeur physique corrélée avec un effort de pincement dudit élément d'étalonnage entre les rampes de protection, ainsi qu'une mesure de la position de l'au moins une rampe de protection mobile. Avantageusement, la position étalonnée est égale à la position mesurée pour l'au moins rampe de protection mobile lorsque la grandeur physique mesurée pour chacun des deux éléments d'étalonnage correspond au même moment à un même effort de pincement seuil.
- le dispositif motorisé de déplacement de l'au moins une rampe mobile comprend au moins deux moteurs électriques équipé chacun d'un codeur de position. L'agencement des deux éléments d'étalonnage peut se faire en agençant respectivement chacun des éléments d'étalonnage au voisinage d'un des deux moteurs électriques. Avantageusement, l'étape de pilotage de l'au moins une rampe de protection comprend de piloter l'un des moteurs électriques pour pincer l'élément d'étalonnage correspondant entre les deux rampes de protection, jusqu'à ce que une intensité électrique de pilotage dudit moteur électrique atteigne une valeur prédéterminée, puis de piloter l'autre moteur électrique jusqu'à pincer l'autre élément d'étalonnage avec une valeur prédéterminée d'une intensité électrique de pilotage dudit autre moteur électrique. En particulier, la position étalonnée de l'au moins une rampe de protection mobile peut être déterminée par les deux positions de codage des deux moteurs électriques correspondant au moment où simultanément, l'intensité électrique de pilotage de chaque moteur électrique est égale à la valeur prédéterminée correspondante.

- les deux rampes de la paire sont mobiles.
- le dispositif motorisé est susceptible d'être piloté soit automatiquement par une unité électronique de commande, soit manuellement par l'intermédiaire d'une interface de commande.
- les rampes de protection sont équipées de moyens de refroidissement par fluide caloporteur.

Selon une variante, la largeur transversale prédéterminée des deux éléments d'étalonnage a été prédéterminée pour que la position étalonnée de l'au moins une rampe de protection mobile corresponde à une position fonctionnelle des rampes de protection.

Avantageusement, la position étalonnée peut être enregistrée par l'unité électronique de commande en correspondance avec le nouveau format de préformes.

Avantageusement, les éléments d'étalonnage peuvent être formés par des gabarits rigides.

Selon une autre variante, à l'issue de l'étape (S1) préalable d'étalonnage, une étape (S2) de positionnement optimal des rampes de protection est déclenchée au cours de laquelle le déplacement des rampes de protection est commandé automatiquement par l'unité électronique de commande vers une position fonctionnelle dans laquelle chaque rampe de protection est écartée transversalement d'un espacement prédéterminé par rapport aux éléments d'étalonnage pour permettre le défilement sans frottement des préformes entre les rampes de protection et/ou la protection thermique des cols.

Avantageusement, la largeur transversale prédéterminée des deux éléments d'étalonnage peut être égale au diamètre D1 sous col des préformes du nouveau format.

Avantageusement, la position fonctionnelle peut être enregistrée par l'unité électronique de commande en correspondance avec le nouveau format de préformes.

Par exemple, les éléments d'étalonnage peuvent être formés par des préformes dudit format. Avantageusement, les préformes utilisées lors de l'étape S1 d'étalonnage sont amenées automatiquement entre les rampes de protection en position initiale par les organes de transport.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une station de chauffage qui est apte à mettre en œuvre le procédé réalisé selon les enseignements de l'invention ;
- la figure 2 est une vue en coupe transversale verticale selon le plan de coupe 2-2 de la figure 1 qui représente une préforme agencée entre des rampes de protection thermique de la station de chauffage, les rampes occupant une position fonctionnelle ;
- la figure 3 est une vue similaire à celle de la figure 2 qui représente les rampes occupant une position initiale ;
- la figure 4 est une vue similaire à celle de la figure 2 dans laquelle les rampes occupent une position d'étalonnage ;
- la figure 5 est une vue de dessus d'un tronçon longitudinal du tunnel de la station de chauffage qui représente les rampes, leur dispositif de motorisation et deux éléments d'étalonnage insérés entre les rampes qui occupent leur position d'étalonnage ;
- la figure 6 est une schéma-bloc qui représente le procédé de positionnement des rampes réalisé selon les enseignements de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée d'arrière en avant, transversale, dirigée de gauche à droite, et verticale dirigée de bas en haut, indiquées par le trièdre "L,V,T" des figures. La direction verticale est utilisée à titre de repère purement géométrique sans rapport avec la gravité terrestre.

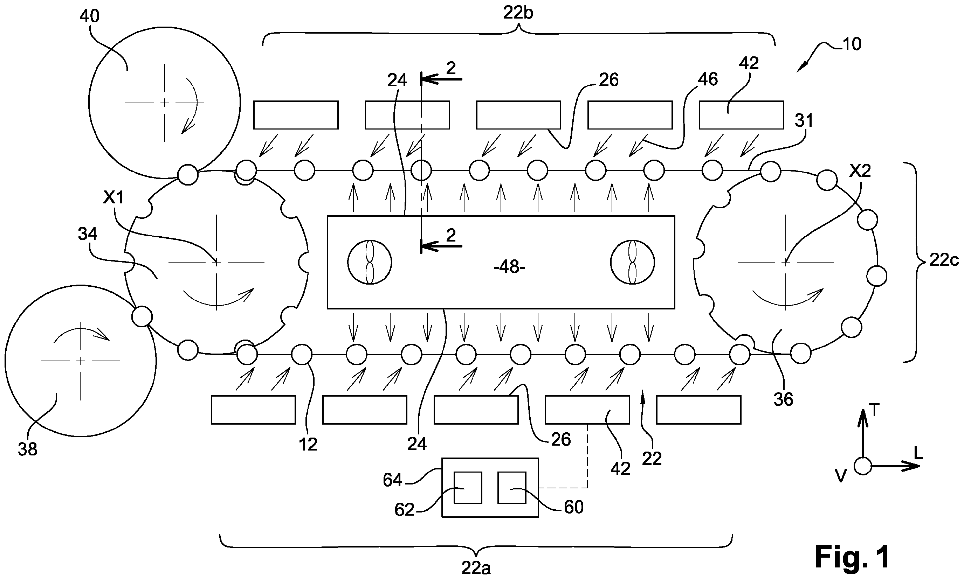

On a représenté à la figure 1 une station 10 de chauffage appartenant à une installation de fabrication de récipients par formage de préformes 12 en matériau thermoplastique, tel que du polyéthylène téréphtalate (PET), par soufflage ou étirage-soufflage.

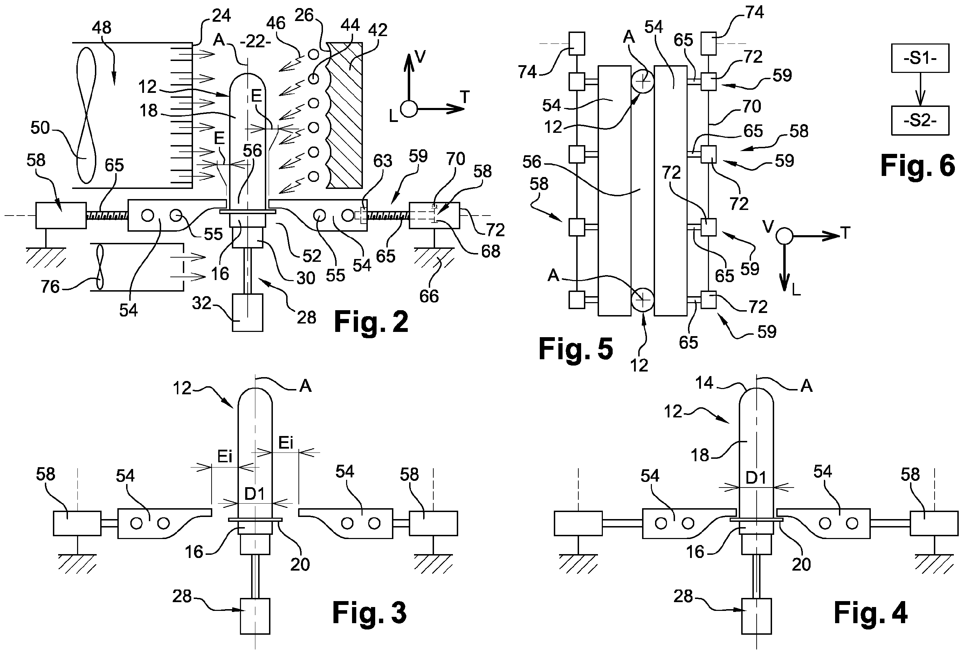

Comme cela est représenté aux figures 2 à 4, une préforme 12 se présente sous la forme d'un corps creux axisymétrique d'axe "A" principal vertical. La préforme 12 est fermée à une première extrémité axiale par un fond 14, et elle est ouverte à une extrémité axiale opposée formant un col 16. La préforme 12 est ainsi divisée axialement en un premier tronçon qui s'étend du fond 14 jusqu'au début du col 16, ce premier tronçon étant communément appelé corps 18 de la préforme, et en un deuxième tronçon formé par ledit col 16. A sa jonction avec le corps 18 de la préforme 12, le col 16 comporte une collerette 20. Le diamètre extérieur du corps 18 de la préforme mesuré directement au-dessus du col 16, en référence aux figures 2 à 4, sera désigné par la suite "diamètre sous col D1" (car la préforme 12 est ici présentée retournée aux figures).

De manière connue, le corps 18 de la préforme 12 est destiné à être étiré pendant une opération de formage du récipient final, tandis que le col 16 de la préforme 12 présente déjà la forme requise pour le récipient final. A cet effet, le corps 18 est destiné à être chauffé dans la station 10 de chauffage de manière à devenir malléable, tandis que le col 16 est destiné à rester tempéré dans la station 10 de chauffage pour éviter de le déformer.

En référence à la figure 1, la station 10 de chauffage comporte un tunnel 22 de chauffage qui présente ici deux tronçons 22a, 22b longitudinaux reliés entre eux par un virage 22c d'extrémité. Chaque tronçon 22a, 22b longitudinal du tunnel 22 de chauffage est délimité transversalement par une paroi 24 intérieur et par une paroi 26 extérieure.

La station 10 de chauffage comporte en outre des organes 28 de transport de préformes 12 en file le long du tunnel 22 de chauffage. Les préformes 12 sont ici transportées avec leur axe "A" vertical et col 16 dirigé vers le bas au niveau des tronçons 22a, 22b longitudinaux et au niveau du virage 22c d'extrémité pour protéger le col 16 de la chaleur.

En variante non représentée, l'invention est aussi applicable à des préformes qui sont transportées avec le col transporté vers le haut.

Comme représenté aux figures 2 à 4, un organe 28 de transport comporte généralement un mandrin 30 qui est destiné à être inséré à l'intérieur du col 16 de la préforme 12 à transporter.

Le défilement des préformes 12 ici réalisé par une chaîne 31 fermée d'organes 28 de transport. Pour ce faire, chaque organe 28 de transport comporte ici un maillon 32 qui sert de support au mandrin 30. Chaque maillon 32 est articulé aux maillons 32 des organes 28 de transport adjacents.

Le mandrin 30 est généralement monté rotatif autour d'un axe vertical sur le maillon 32 pour permettre l'entraînement en rotation des préformes 12 transportées autour de leur axe "A" principal pendant leur déplacement le long du tunnel 22.

La chaîne 31 est guidée et mise en mouvement par engrènement autour de deux roues 34, 36 de guidage. Chaque roue 34, 36 est montée à rotation autour d'un axe "X1, X2" vertical central associé. Les roues 34, 36 de guidage sont agencées aux deux extrémités longitudinales des tronçons 22a, 22b longitudinaux de tunnel 22 de chauffage.

En variante non représentée, l'invention est aussi applicable à des organes de transport qui sont portés par des navettes indépendantes qui se déplacent le long d'un rail. Chaque navette forme par exemple avec le rail un moteur électrique linéaire.

La première roue 34 permet de charger des préformes froides délivrées par une roue 38 d'entrée située en amont du premier tronçon 22a longitudinal, et elle permet aussi de décharger les préformes chaudes sur une roue 40 de sortie située en aval du deuxième tronçon 22b longitudinal.

La deuxième roue 36 permet de réaliser le virage 22c du tunnel 22 de chauffage.

Au moins l'une des deux roues 34, 36 de guidage est mue en rotation par un moteur (non représenté) pour permettre d'entraîner la chaîne en rotation dans un sens antihoraire en se référant à la figure 1. Les préformes 12 défilent ainsi, retournées col 16 en bas, successivement longitudinalement vers l'avant à travers le premier tronçon 22a de tunnel, puis dans le virage 22c et enfin longitudinalement vers l'arrière à travers le deuxième tronçon 22b de tunnel.

La paroi 26 extérieure du tunnel 22 de chauffage est ici formée par la face interne d'une pluralité de modules 42 de chauffage. Chaque module 42 de chauffage comporte des moyens de chauffage qui irradient un rayonnement 46 chauffant globalement transversalement vers l'intérieur du tunnel 22 de chauffage, comme cela est illustré à la figure 2. Il s'agit ici, à titre non limitatif, de lampes 44 à infrarouge.

La paroi 24 intérieure du tunnel 22 de chauffage est ici formée par une face d'un bloc 48 de refroidissement. Le bloc 48 de refroidissement est ici agencé transversalement entre les deux tronçons 22a, 22b longitudinaux de tunnel. Comme cela est représenté schématiquement à la figure 2, le bloc 48 de refroidissement comporte des moyens d'aération tels qu'un ventilateur 50 qui produit un courant d'air qui est dirigé transversalement vers l'intérieur du tunnel 22 à travers une grille formée dans la paroi 24 intérieure.

Le tunnel 22 est destiné à recevoir les corps 18 des préformes 12 retournées col 16 en bas, leur axe "A" étant vertical, pour permettre leur chauffage à la température pour l'opération ultérieure de formage des récipients finaux.

Le tunnel 22 débouche verticalement vers le bas sur un couloir 52 de défilement des cols 16 des préformes 12. Comme expliqué précédemment, les cols 16 des préformes 12 doivent être tempérés, c'est-à-dire maintenus à une température inférieure à la température de transition vitreuse du matériau les constituant.

Pour limiter le passage de radiations chauffantes du tunnel 22 vers le couloir 52 ou le passage d'air chaud par convection, au moins une paire de rampes 54 longitudinales parallèles de protection thermique des cols 16 des préformes 12 est interposée verticalement entre le tunnel 22 recevant les corps des préformes et le couloir 52 recevant les cols 16 des préformes. Chaque tronçon 22a, 22b longitudinal est ici équipé d'une paire de rampes 54 de protection.

La face supérieure de chaque rampe 54 de protection, tournée vers le tunnel 22, forme avantageusement une surface réfléchissante qui permet de réfléchir les rayonnements chauffant en direction du corps 18 de la préforme 12.

Pour éviter que la chaleur ne s'accumule dans les rampes 54 de protection, chaque rampe 54 de protection est avantageusement équipée de moyens 55 de refroidissement tel q'un circuit de refroidissement dans lequel circule un fluide caloporteur.

Les rampes 54 de protection d'une paire sont agencées dans un même plan transversal longitudinal, de part et d'autre de la trajectoire de défilement des préformes 12. A cet effet, les rampes 54 de protection sont écartées transversalement pour réserver une rainure 56 longitudinale de défilement des préformes 12.

Les préformes 12 défilant le long du tunnel 22 col 16 en bas, les rampes 54 de protection d'une paire sont agencées directement au-dessus de la collerette 20 des préformes 12, au niveau du diamètre sous col "D1". La rainure 56 présente une largeur transversale égale à la somme du diamètre sous col "D1" de la préforme 12 et deux fois un espacement "E" minimal transversal réservé de part et d'autre de la préforme 12 pour permettre son défilement entre les rampes 54 de protection sans contact avec ces dernières. La largeur de la rainure 56 est notamment inférieure au diamètre extérieur de la collerette 20 des préformes 12.

Afin de permettre l'adaptation de la largeur de la rainure 56 à plusieurs formats de préformes 12, au moins une rampe 54 de protection d'une paire est montée mobile transversalement par rapport au tunnel 22 de chauffage. Dans l'exemple représenté aux figures, les deux rampes 54 de protection de la paire sont montées mobiles transversalement par rapport au tunnel 22 de chauffage.

En outre, le déplacement des rampes 54 de protection est commandé par un dispositif 58 motorisé pour adapter automatiquement la largeur de la rainure 56. Le dispositif 58 motorisé est susceptible d'être piloté soit automatiquement par une unité 60 électronique de commande, soit manuellement par l'intermédiaire d'une interface 62 de commande. L'interface 62 de commande est par exemple agencée sur un pupitre 64 de commande de l'installation qui permet aussi de commander d'autres paramètres de fonctionnement.

En variante non représentée de l'invention, le module 44 de chauffage est aussi monté mobile transversalement et/ou verticalement par rapport à la trajectoire des préformes et des rampes 54 de protection grâce à un mécanisme de déplacement.

Une fois les rampes de protection positionnées dans une position étalonnée, on pilote le déplacement du module 44 de chauffage par rapport à une position étalonnée des rampes de protection grâce à un mécanisme de déplacement.

Le positionnement du module 44 de chauffage par rapport à une position étalonnée des rampes de protection permet de s'assurer de ne pas endommager le module 44 de chauffe pendant son positionnement, notamment les lampes et un positionnement optimum du module de chauffage par rapport à la préforme à chauffer.

Le mécanisme de déplacement est susceptible d'être piloté soit automatiquement par une unité 60 électronique de commande, soit manuellement par l'intermédiaire d'une interface 62 de commande.

En automatique, l'unité 60 électronique de commande pilote le mécanisme de déplacement d'une consigne.

La consigne peut être une dimension préenregistrée pour une position étalonnée des rampes de protection.

Dans une autre variante non représentée, le module de chauffage est par exemple solidaire à au moins une des rampes de protection.

Le dispositif 58 motorisé d'une rampe 54 de protection comporte ici plusieurs mécanismes 59 de déplacement qui sont montés le long de la rampe 54 de protection. Chaque mécanisme 59 de déplacement comporte un écrou 63 qui est monté fixe sur la rampe 54 de protection et une vis 65, comme cela est illustré à la figure 2. La vis 65 peut être guidée en rotation par un pallier (non représenté) solidaire d'un bâti 66 de la station 10 de chauffage.

La vis 65 est liée à des moyens qui assurent son entraînement en rotation. Ces moyens d'entraînement en rotation comportent ici une roue 68 dentée qui est solidaire en rotation de la vis 65. La roue 68 dentée est associée à un arbre 70 fileté. Cet arbre 70 fileté s'étend longitudinalement, tout le long de la rampe 54 de protection associée en engrenant la roue 68 dentée de chaque mécanisme 59 associé à ladite rampe 54 de protection.

La roue 68 dentée est ici logée dans un boîtier 72 de protection.

La rotation de l'arbre 70 fileté est commandée par un moteur 74 électrique agencé en bout d'arbre, comme cela est illustré à la figure 5. Suivant le sens de rotation du moteur 74 électrique, cela provoquera le déplacement par translation transversale de la rampe 54 de protection dans un sens ou dans l'autre pour écarter les rampes 54 de protection ou pour les rapprocher.

Les moteurs 74 des dispositifs 58 motorisés sont susceptibles d'être pilotés automatiquement par l'unité 60 électronique de commande. Ils sont aussi susceptibles d'être pilotés manuellement par un opérateur humain par l'intermédiaire de l'interface 62 de commande.

Les moteurs 74 commandant les déplacements des rampes 54 de protection d'une même paire sont susceptibles d'être pilotés simultanément pour rapprocher ou écarter simultanément les deux rampes 54 de protection l'une par rapport à l'autre d'une même distance.

En variante, Les moteurs 74 commandant les déplacements des rampes 54 de protection d'une même paire sont susceptibles d'être pilotés indépendamment de manière qu'un opérateur puisse régler la position d'une première rampe 54 de protection de la paire, puis de l'autre rampe 54 de protection de la paire à partir de l'interface 62 de commande.

Les moteurs 74 électrique utilisés sont par exemple équipés de codeurs qui permettent de mémoriser la position qu'ils occupent dans l'unité 60 électronique de commande.

Par ailleurs, pour éviter que la chaleur passant par la rainure 56 ne chauffe l'air contenu dans le couloir 52, un deuxième moyen de ventilation 76 peut être agencé pour souffler transversalement un courant d'air dans le couloir 52 afin d'en chasser l'air chaud, comme cela est représenté à la figure 2.

Lors d'un changement de format de préformes 12, il est nécessaire de procéder au positionnement précis des rampes de protection afin d'assurer que la rainure 56 ait une largeur suffisante pour permettre le bon défilement des préformes 12, mais suffisamment étroite pour minimiser la transmission de chaleur, par rayonnement ou par convection, entre le tunnel 22 et le couloir 52.

L'invention propose un procédé de positionnement des rampes 54 de protection lors d'un changement de format de préformes, qui comporte une étape "S1" préalable d'étalonnage.

Comme cela est représenté à la figure 3, au début de l'étape "S1" d'étalonnage, les rampes 54 de protection d'une paire occupent une position initiale dans laquelle elles sont écartées d'une première distance très supérieure au diamètre "D1" sous col des préformes 12 du nouveau format. Ainsi, la rainure 56 présente une largeur transversale qui est égale au diamètre "D1" sous col avec addition de deux fois un espace "Ei" initial de part et d'autre de la préforme 12. Cet espace "Ei" initial est très supérieur à l'espacement "E" minimal défini précédemment.

Au moins deux éléments d'étalonnage présentant une largeur transversale de même dimensions que le diamètre "D1" sous col des préformes du nouveau format sont agencés entre les rampes 54 de protection de la paire. Comme cela est notamment représenté à la figure 5, les éléments d'étalonnage sont agencés globalement à proximité de chaque extrémité longitudinale de la rainure 56. Ceci permet d'assurer le parallélisme des rampes 54 de protection de la paire au cours du procédé de positionnement.

Les éléments d'étalonnage sont formés par des préformes 12 dudit nouveau format. Les préformes 12 servant d'élément d'étalonnage sont ici amenées automatiquement entre les rampes par les organes 28 de transport. Bien entendu, pendant le déroulement du procédé de positionnement, les préformes 12 servant d'élément d'étalonnage sont immobilisées entre les rampes 54.

En variante, les préformes 12 servant d'éléments d'étalonnage sont positionnées manuellement entre les rampes 54, par exemple en les insérant manuellement sur des mandrins 30 des éléments de transport préalablement immobilisés.

Selon une autre variante non représentée de l'invention, les éléments d'étalonnage sont formés par des gabarits.

Après positionnement des éléments d'étalonnage, ici les préformes 12, les rampes 54 de protection sont pilotées manuellement en déplacement par l'intermédiaire de l'interface 62 afin de les rapprocher l'une de l'autre depuis leur position initiale, représentée à la figure 3, jusqu'à une position étalonnée dans laquelle elles sont chacune au contact simultané des deux éléments d'étalonnage, ici les préformes 12, comme cela est illustré à la figure 4. Dans la position étalonnée des rampes 54 de protection, la rainure 56 présente ainsi une largeur transversale qui est égale au diamètre "D1" sous col des préformes 12 du nouveau format. En position d'étalonnage, les préformes 12 ne sont pas serrées entre les rampes 54 de protection.

Le réglage manuel de la position des rampes 54 de protection permet notamment d'éviter que les rampes 54 ne soient endommagées en serrant trop fort les préformes 12, comme cela pourrait se produire en cas de réglage entièrement automatique.

A l'issue de l'étape "S1" préalable d'étalonnage, une étape "S2" de positionnement optimal des rampes 54 de la paire est déclenchée au cours de laquelle les rampes 54 de la paire sont commandées automatiquement en déplacement par l'unité 60 électronique de commande depuis leur position d'étalonnage vers une position fonctionnelle dans laquelle chaque rampe est écartée transversalement de l'espacement "E" prédéterminé par rapport aux éléments d'étalonnage, ici les préformes 12. La position fonctionnelle est illustrée à la figure 2. Ceci permet de garantir que la rainure 56 soit suffisamment large pour permettre le défilement sans frottement des préformes entre les rampes 54 de protection, tout en minimisant le passage de chaleur vers le couloir 52.

Avantageusement, lorsque les moteurs 74 sont équipés de codeurs, la position fonctionnelle et/ou la position d'étalonnage des rampes 54 de protection est enregistrée en correspondance avec le nouveau format des préformes 12. Ainsi, lors d'un prochain changement de format de préforme pour un format identique, il sera possible de positionner directement les rampes 54 de protection dans leur position fonctionnel ou dans leur position d'étalonnage sans avoir à réitérer le procédé d'étalonnage.

Le procédé réalisé selon les enseignements de l'invention permet avantageusement de réaliser le positionnement semi-automatique des rampes 54 de protection lors d'un changement de formats de préformes 12 afin d'obtenir une rainure 56 de largeur optimale.

## Revendications

1. Procédé de positionnement de rampes (54) de protection d'une station (10) de chauffage de préformes (12) réalisés en matériau thermoplastique, pour adapter la station de chauffage à un nouveau format de préformes (12), chaque préforme (12) présentant un col (16) destiné à être tempéré et un corps (18) présentant, directement au-dessous du col (16) un diamètre extérieur dit "diamètre (D1) sous col", la station (10) de chauffage comportant :
- des organes (28) de transport des préformes (12) en file le long d'un tunnel (22) de chauffage ;
- au moins une paire de rampes (54) longitudinales parallèles de protection thermique des cols (16) qui sont écartées transversalement pour réserver une rainure (56) longitudinale de défilement des préformes (12);
- un dispositif (58) motorisé de déplacement d'au moins une rampe (54) mobile pour adapter automatiquement la largeur de la rainure (56),
le procédé de positionnement étant tel qu' au moins l'une des rampes (54) de protection est mobile transversalement pour adapter la largeur de la rainure (56) au nouveau format de préformes (12);
le procédé de positionnement comportant une étape (S1) préalable d'étalonnage au cours de laquelle :
on amène les deux rampes (54) de protection dans une position initiale dans laquelle elles sont écartées d'une première distance très supérieure au diamètre (D1) sous col de préformes (12) du nouveau format,
on agence au moins deux éléments (12) d'étalonnage présentant une largeur transversale prédéterminée en relation avec le diamètre (D1) sous col des préformes (12) du nouveau format
puis on pilote le déplacement de l'au moins une rampe (54) de protection mobile afin de rapprocher transversalement les rampes (54) de protection l'une de l'autre dans une position étalonnée dans laquelle elles sont chacune au contact simultané des deux éléments (12) d'étalonnage.

2. Procédé selon la revendication précédente, **caractérisé en ce que** l'étape préalable d'étalonnage comprend pour chacun des deux éléments d'étalonnage, une mesure d'une grandeur physique corrélée avec un effort de pincement dudit élément d'étalonnage entre les rampes (54) de protection, ainsi qu'une mesure de la position de l'au moins une rampe (54) de protection mobile,
et **en ce que** la position étalonnée est égale à la position mesurée pour l'au moins rampe (54) de protection mobile lorsque la grandeur physique mesurée pour chacun des deux éléments d'étalonnage correspond au même moment à un même effort de pincement seuil.

3. Procédé selon la revendication 1 ou 2, dans lequel le dispositif (58) motorisé de déplacement de l'au moins une rampe (54) mobile comprend au moins deux moteurs électriques équipé chacun d'un codeur de position,
le procédé étant **caractérisé en ce que** l'agencement des deux éléments d'étalonnage se fait en agençant respectivement chacun des éléments d'étalonnage au voisinage d'un des deux moteurs électriques,
**en ce que** l'étape de pilotage de l'au moins une rampe (54) de protection comprend de piloter l'un des moteurs électriques pour pincer l'élément d'étalonnage correspondant entre les deux rampes (54) de protection, jusqu'à ce que une intensité électrique de pilotage dudit moteur électrique atteigne une valeur prédéterminée, puis de piloter l'autre moteur électrique jusqu'à pincer l'autre élément d'étalonnage avec une valeur prédéterminée d'une intensité électrique de pilotage dudit autre moteur électrique, et
**en ce que** la position étalonnée de l'au moins une rampe (54) de protection mobile est déterminée par les deux positions de codage des deux moteurs électriques correspondant au moment où simultanément, l'intensité électrique de pilotage de chaque moteur électrique est égale à la valeur prédéterminée correspondante.

4. Procédé selon l'une des revendications précédentes, **caractérisé en ce que** les deux rampes (54) de la paire sont mobiles.

5. Procédé selon l'une des revendications précédentes, **caractérisé en ce que** le dispositif (58) motorisé est susceptible d'être piloté soit automatiquement par une unité (60) électronique de commande, soit manuellement par l'intermédiaire d'une interface (62) de commande.

6. Procédé selon la revendication précédente, **caractérisé en ce que** la largeur transversale prédéterminée des deux éléments (12) d'étalonnage a été prédéterminée pour que la position étalonnée de l'au moins une rampe (54) de protection mobile corresponde à une position fonctionnelle des rampes (54) de protection, et **en ce que** la position étalonnée est enregistrée par l'unité (60) électronique de commande en correspondance avec le nouveau format de préformes (12).

7. Procédé selon la revendication précédente, **caractérisé en ce que** les éléments d'étalonnage sont formés par des gabarits rigides.

8. Procédé selon la revendication 5, **caractérisé en ce que**, à l'issue de l'étape (S1) préalable d'étalonnage, une étape (S2) de positionnement optimal des rampes (54) de protection est déclenchée au cours de laquelle le déplacement des rampes (54) de protection est commandé automatiquement par l'unité (60) électronique de commande vers une position fonctionnelle dans laquelle chaque rampe (54) de protection est écartée transversalement d'un espacement (E) prédéterminé par rapport aux éléments (12) d'étalonnage pour permettre le défilement sans frottement des préformes (12) entre les rampes (54) de protection et/ou la protection thermique des cols.

9. Procédé selon la revendication précédente, **caractérisé en ce que** la largeur transversale prédéterminée des deux éléments (12) d'étalonnage est égale au diamètre (D1) sous col des préformes (12) du nouveau format.

10. Procédé selon la revendication précédente, **caractérisé en ce que** la position fonctionnelle est enregistrée par l'unité (60) électronique de commande en correspondance avec le nouveau format de préformes (12).

11. Procédé selon l'une quelconque des revendications 8 à 10, **caractérisé en ce que** les éléments d'étalonnage sont formés par des préformes (12) dudit format.

12. Procédé selon la revendication précédente, **caractérisé en ce que** les préformes (12) utilisées lors de l'étape (S1) d'étalonnage sont amenées automatiquement entre les rampes (54) de protection en position initiale par les organes (28) de transport.

13. Procédé selon l'une quelconque des revendications précédentes, **caractérisé en ce que** les rampes (54) de protection sont équipées de moyens (55) de refroidissement par fluide caloporteur.

## Patentansprüche

1. Verfahren zum Positionieren von Abschirmungsrampen (54) einer Heizstation (10) für Vorformen (12) aus thermoplastischem Material, um die Heizstation an ein neues Format von Vorformen (12) anzupassen, wobei jede Vorform (12) einen Hals (16), der dazu bestimmt ist, temperiert zu werden, und einen Körper (18) aufweist, welcher direkt unterhalb des Halses (16) einen Außendurchmesser aufweist, der als "Durchmesser (D1) unterhalb des Halses" bezeichnet wird, wobei die Heizstation (10) Folgendes umfasst:
- Einrichtungen (28) für den Transport der Vorformen (12) in einer Reihe entlang eines Heiztunnels (22);
- mindestens ein Paar paralleler Längsrampen (54) zur Wärmeabschirmung der Hälse (16), die in Querrichtung voneinander beabstandet sind, um einen Längsspalt (56) für das Durchlaufen der Vorformen (12) freizulassen;
- eine motorisierte Vorrichtung (58) zum Bewegen mindestens einer beweglichen Rampe (54), um die Breite des Spalts (56) automatisch anzupassen,
wobei das Positionierungsverfahren derart ist, dass mindestens eine der Abschirmungsrampen (54) in Querrichtung beweglich ist, um die Breite des Spalts (56) an das neue Format von Vorformen (12) anzupassen;
wobei das Positionierungsverfahren einen Vorabschritt (S1) des Kalibrierens umfasst, während dessen:
die zwei Abschirmungsrampen (54) in eine Ausgangsposition gebracht werden, in der sie um eine erste Distanz voneinander beabstandet sind, die deutlich größer als der Durchmesser (D1) unterhalb des Halses von Vorformen (12) des neuen Formats ist,
mindestens zwei Kalibrierelemente (12) angeordnet werden, die eine vorgegebene Querbreite in Bezug auf den Durchmesser (D1) unterhalb des Halses der Vorformen (12) des neuen Formats aufweisen,
dann die Bewegung der mindestens einen beweglichen Abschirmungsrampe (54) angesteuert wird, um die Abschirmungsrampen (54) in Querrichtung bis in eine kalibrierte Position einander anzunähern, in der beide mit den zwei Kalibrierelementen (12) simultan in Kontakt sind.

2. Verfahren nach dem vorhergehenden Anspruch, **dadurch gekennzeichnet, dass** der Vorabschritt des Kalibrierens für jedes der zwei Kalibrierelemente das Messen einer physikalischen Größe, die mit einer Einklemmkraft des Kalibrierelements zwischen den Abschirmungsrampen (54) korreliert ist, sowie das Messen der Position der mindestens einen beweglichen Abschirmungsrampe (54) beinhaltet,
und dass die kalibrierte Position gleich der Position ist, die für die mindestens eine bewegliche Abschirmungsrampe (54) gemessen wird, wenn die für jedes der zwei Kalibrierelemente gemessene physikalische Größe zum gleichen Zeitpunkt einer gleichen Schwelleneinklemmkraft entspricht.

3. Verfahren nach Anspruch 1 oder 2, wobei die motorisierte Vorrichtung (58) zum Bewegen der mindestens einen beweglichen Rampe (54) mindestens zwei Elektromotoren beinhaltet, die jeweils mit einem Positionsgeber ausgerüstet sind,
wobei das Verfahren **dadurch gekennzeichnet ist, dass** das Anordnen der zwei Kalibrierelemente dadurch erfolgt, dass jedes der Kalibrierelemente jeweils in der Nähe eines der zwei Elektromotoren angeordnet wird,
dass der Schritt des Ansteuerns der mindestens einen Abschirmungsrampe (54) Folgendes beinhaltet: das Ansteuern eines der Elektromotoren, um das entsprechende Kalibrierelement zwischen den zwei Abschirmungsrampen (54) einzuklemmen, bis eine elektrische Ansteuerungsstärke des Elektromotors einen vorgegebenen Wert erreicht, und dann das Ansteuern des anderen Elektromotors, bis das andere Kalibrierelement mit einem vorgegebenen Wert einer elektrischen Ansteuerungsstärke des anderen Elektromotors eingeklemmt wird, und
dass die kalibrierte Position der mindestens einen beweglichen Abschirmungsrampe (54) durch die zwei erfassten Positionen der zwei Elektromotoren zu dem Zeitpunkt bestimmt wird, an dem simultan die elektrische Ansteuerungsstärke jedes Elektromotors gleich dem entsprechenden vorgegebenen Wert ist.

4. Verfahren nach einem der vorhergehenden Ansprüche, **dadurch gekennzeichnet, dass** die zwei Rampen (54) des Paares beweglich sind.

5. Verfahren nach einem der vorhergehenden Ansprüche, **dadurch gekennzeichnet, dass** die motorisierte Vorrichtung (58) entweder automatisch durch eine elektronische Steuereinheit (60) oder manuell über eine Steuerschnittstelle (62) angesteuert werden kann.

6. Verfahren nach dem vorhergehenden Anspruch, **dadurch gekennzeichnet, dass** die vorgegebene Querbreite der zwei Kalibrierelemente (12) vorab so bestimmt wurde, dass die kalibrierte Position der mindestens einen beweglichen Abschirmungsrampe (54) einer Betriebsposition der Abschirmungsrampen (54) entspricht, und dass die kalibrierte Position durch die elektronische Steuereinheit (60) entsprechend dem neuen Format von Vorformen (12) aufgezeichnet wird.

7. Verfahren nach dem vorhergehenden Anspruch, **dadurch gekennzeichnet, dass** die Kalibrierelemente durch starre Schablonen gebildet werden.

8. Verfahren nach Anspruch 5, **dadurch gekennzeichnet, dass** nach Abschluss des Vorabschritts (S1) des Kalibrierens ein Schritt (S2) zur optimalen Positionierung der Abschirmungsrampen (54) eingeleitet wird, während dessen die Bewegung der Abschirmungsrampen (54) durch die elektronische Steuereinheit (60) automatisch in eine Betriebsposition gesteuert wird, in welcher jede Abschirmungsrampe (54) in Querrichtung um einen vorgegebenen Abstand (E) von den Kalibrierelementen (12) beabstandet ist, um ein reibungsfreies Durchlaufen der Vorformen (12) zwischen den Abschirmungsrampen (54) und/oder die Wärmeabschirmung der Hälse zu gewährleisten.

9. Verfahren nach dem vorhergehenden Anspruch, **dadurch gekennzeichnet, dass** die vorgegebene Querbreite der zwei Kalibrierelemente (12) gleich dem Durchmesser (D1) unterhalb des Halses der Vorformen (12) des neuen Formats ist.

10. Verfahren nach dem vorhergehenden Anspruch, **dadurch gekennzeichnet, dass** die Betriebsposition durch die elektronische Steuereinheit (60) entsprechend dem neuen Format von Vorformen (12) aufgezeichnet wird.

11. Verfahren nach einem der Ansprüche 8 bis 10, **dadurch gekennzeichnet, dass** die Kalibrierelemente durch Vorformen (12) des Formats gebildet werden.

12. Verfahren nach dem vorhergehenden Anspruch, **dadurch gekennzeichnet, dass** die während des Kalibrierschritts (S1) verwendeten Vorformen (12) von den Transporteinrichtungen (28) automatisch zwischen die Abschirmungsrampen (54) in der Ausgangsposition gebracht werden.

13. Verfahren nach einem der vorhergehenden Ansprüche, **dadurch gekennzeichnet, dass** die Abschirmungsrampen (54) mit Mitteln (55) zur Kühlung durch ein Wärmeträgerfluid ausgerüstet sind.

## Claims

1. Method for positioning protective shields (54) in a station (10) for heating preforms (12) made of thermoplastic material, so as to adapt the heating station to a new format of preforms (12), each preform (12) having a neck (16) intended to be at a moderate temperature and a body (18) having, directly beneath the neck (16), an outside diameter referred to as the "under-neck diameter (D1)", the heating station (10) having:
- members (28) for transporting the preforms (12) one after another along a heating tunnel (22);
- at least one pair of parallel longitudinal heat shields (54) for the necks (16), said heat shields being spaced apart transversely so as to leave a longitudinal slot (56) for the preforms (12) to run through;
- a motor-driven device (58) for moving the at least one movable shield (54) so as to automatically adapt the width of the slot (56),
the positioning method being **characterized in that** at least one of the protective shields (54) is movable transversely so as to adapt the width of the slot (56) to the new format of preforms (12), the positioning method having a prior calibration step (S1), during which:
the two protective shields (54) are moved into an initial position in which they are spaced apart by a first distance much greater than the under-neck diameter (D1) of preforms (12) of the new format,
at least two calibration elements (12) that have a predetermined transverse width relative to the under-neck diameter (D1) of the preforms (12) of the new format are arranged,
then the at least one movable protective shield (54) is driven in movement so as to move the protective shields (54) transversely toward one another into a calibrated position in which they are each in simultaneous contact with the two calibration elements (12).

2. Method according to the preceding claim, **characterized in that** the prior calibration step comprises, for each of the two calibration elements, a measurement of a physical variable correlated with a pinching force of said calibration element between the protective shields (54), and a measurement of the position of the at least one movable protective shield (54),
and **in that** the calibrated position is equal to the measured position for the at least one movable protective shield (54) when the physical variable measured for each of the two calibration elements corresponds at the same time to one and the same threshold pinching force.

3. Method according to Claim 1 or 2, wherein the motor-driven device (58) for moving the at least one movable shield (54) comprises at least two electric motors that are each equipped with a position encoder,
the method being **characterized in that** the arrangement of the two calibration elements is effected by arranging each of the calibration elements respectively in the vicinity of one of the two electric motors,
**in that** the step of driving the at least one protective shield (54) comprises driving one of the electric motors so as to pinch the corresponding calibration element between the two protective shields (54) until an electric driving intensity of said electric motor reaches a predetermined value, and then driving the other electric motor until the other calibration element is pinched with a predetermined value of an electric driving intensity of said other electric motor, and
**in that** the calibrated position of the at least one movable protective shield (54) is determined by the two encoding positions of the two electric motors corresponding to the time at which, simultaneously, the electric driving intensity of each electric motor is equal to the corresponding predetermined value.

4. Method according to one of the preceding claims, **characterized in that** the two shields (54) of the pair are movable.

5. Method according to one of the preceding claims, **characterized in that** the motor-driven device (58) is able to be driven either automatically by an electronic control unit (60) or manually via a control interface (62).

6. Method according to the preceding claim, **characterized in that** the predetermined transverse width of the two calibration elements (12) has been predetermined in order that the calibrated position of the at least one movable protective shield (54) corresponds to a functional position of the protective shields (54), and **in that** the calibrated position is recorded by the electronic control unit (60) in correspondence with the new format of preforms (12).

7. Method according to the preceding claim, **characterized in that** the calibration elements are formed by rigid templates.

8. Method according to Claim 5, **characterized in that**, following the prior calibration step (S1), a step (S2) of optimally positioning the protective shields (54) is started, during which the movement of the protective shields (54) is controlled automatically by the electronic control unit (60) toward a functional position in which each protective shield (54) is spaced apart transversely by a predetermined spacing (E) with respect to the calibration elements (12) so as to allow the preforms (12) to run between the protective shields (54) and/or the heat shielding of the necks without friction.

9. Method according to the preceding claim, **characterized in that** the predetermined transverse width of the two calibration elements (12) is equal to the under-neck diameter (D1) of the preforms (12) of the new format.

10. Method according to the preceding claim, **characterized in that** the functional position is recorded by the electronic control unit (60) in correspondence with the new format of preforms (12).

11. Method according to any one of claims 8 to 10, **characterized in that** the calibration elements are formed by preforms (12) of said format.

12. Method according to the preceding claim, **characterized in that** the preforms (12) used during the calibration step (S1) are introduced automatically between the protective shields (54) into the initial position by the transport members (28).

13. Method according to any one of the preceding claims, **characterized in that** the protective shields (54) are equipped with means (55) for cooling by heat-transfer fluid.
